# DEMANDE DE BREVET EUROPEEN

(11) **EP 1 429 050 A2**
(43) Date de publication de la demande: **16.06.2004**
(21) Numéro de dépôt: 03293125.5
(22) Date de dépôt: 12.12.2003
(51) Int. Cl.: F16H 3/12, F16H 3/089

(54) **Boite de vitesses robotisée à six rapports de vitesses pour véhicule automobile**

(30) Priorité: 13.12.2002 FR 0215786
(71) Demandeur: Renault s.a.s., 92100 Boulogne Billancourt (FR)
(72) Inventeur: Buannec, Michel, 78480 Verneuil sur Seine (FR)
(74) Mandataire: Rougemont, Bernard

(57) **Abrégé**

Cette boîte de vitesses de véhicule automobile comprend un ensemble de pignons fixes (14-1, 14-3, ...,14-7) montés sur un arbre principal (10), un ensemble de pignons fous (18-1, 18-3, ..., 18-7) correspondant montés sur un arbre secondaire (12) et engrènant respectivement avec les pignons fixes, au moins un premier dispositif de synchronisation (24) capable de solidariser en rotation un pignon fou avec l'arbre secondaire (12) et comprenant un moyeu de synchronisation solidaire en rotation de l'arbre secondaire et des moyens de commande de sélection et de passage de rapport de vitesse agissant sur le dispositif de synchronisation.

Le moyeu de synchronisation porte un pignon fixe additionnel (18-2) engrènant avec un pignon fou (14-2) monté sur l'arbre primaire. Il comporte en outre un deuxième dispositif de synchronisation capable de solidariser en rotation le pignon fou monté sur l'arbre primaire et l'arbre primaire.

## Description

La présente invention concerne une boîte de vitesses robotisée pour véhicule automobile et, en particulier, une boîte de vitesses permettant un passage de rapport de vitesses sans rupture de couple, au moyen d'une commande hydraulique.

On connaît, par exemple, par la demande de brevet français n° 2 786 842, une transmission dite "robotisée" comportant une boîte de vitesses mécanique équipée d'actionneurs et munie d'un embrayage, l'ensemble étant actionné de façon coordonnée pour assurer la fermeture et l'ouverture de l'embrayage ainsi que le déplacement de baladeurs entraînés par les actionneurs.

Dans ce type de transmission, le "robot" exécute toutes les manoeuvres à la place du conducteur. De plus, la boîte de vitesses décrite dans ce document comporte un embrayage de répartition de couple qui permet d'éviter l'interruption du couple transmis aux roues pendant les passages de vitesses. Grâce à l'existence d'un tel embrayage de répartition de couple, piloté hydrauliquement, le couple moteur peut être dérivé sur un rapport élevé de la transmission avant de solidariser un pignon correspondant à un rapport de transmission que l'on souhaite engager.

Une telle boîte de vitesses robotisée utilise une pluralité de vérins hydrauliques actionnant les axes de commande et de sélection par l'intermédiaire de leviers de renvoi de structure relativement complexe et avec des dispositifs d'interdiction appropriés. Les axes de commande destinés à provoquer le crabotage et le décrabotage des différents pignons de la transmission sont pourvus de fourchettes de commande qui exercent une poussée sur des baladeurs pourvus de systèmes anti-lâchés pour maintenir en place le rapport de transmission en prise. Il est également nécessaire de prévoir des capteurs de position lorsque ces différents éléments sont actionnés.

Il en résulte, dans la pratique, des difficultés pour le pilotage d'un tel système. De plus, la multiplication du nombre de pièces entraîne une augmentation du coût de la transmission. En outre, l'implantation des différents éléments entrant dans la constitution de la boîte de vitesse elle-même augmente la complexité du carter et de la boîte dans son ensemble.

Enfin, l'architecture de cette boîte, dans laquelle tout le système de synchronisation est disposé entre deux pignons d'extrémité, impose une longueur minimale pour la boîte et limite dès lors le nombre de rapports de vitesses procurés par la boîte, pour un nombre d'arbres donné.

La présente invention a donc pour but de fournir une boîte de vitesses robotisée pour véhicule automobile, en particulier une boîte de vitesses avec passage des rapports de transmission sans rupture de couple, qui soit d'un encombrement réduit et permette ainsi de disposer de pignons additionnels et donc d'un nombre de rapports de vitesses accru, sans nécessiter de prévoir un arbre supplémentaire pour le montage des pignons.

Ainsi, la boîte de vitesses de véhicule automobile selon l'invention comporte un ensemble de pignons fixes monté sur un arbre principal, un ensemble de pignons fous correspondant monté sur un arbre secondaire et engrènant respectivement avec les pignons fixes, au moins un premier dispositif de synchronisation capable de solidariser un pignon fou avec l'arbre secondaire et comprenant un moyeu de synchronisation solidaire en rotation de l'arbre secondaire et des moyens de commande de sélection et de passage de rapports de vitesses agissant sur le dispositif de synchronisation.

Le moyeu de synchronisation porte un pignon fixe additionnel engrènant avec un pignon fou monté sur l'arbre primaire.

Elle comporte en outre un deuxième dispositif de synchronisation capable de solidariser en rotation le pignon fou monté sur l'arbre primaire et l'arbre primaire.

Selon une autre caractéristique de cette boîte de vitesses, le deuxième dispositif de synchronisation est un dispositif de synchronisation du type à baladeurs et fourchettes de commande.

En ce qui concerne le premier dispositif de synchronisation, celui-ci comporte au moins une chambre primaire délimitée en partie par une surface solidaire d'un pignon fou et en partie par une paroi mobile axialement formant piston principal, ledit piston comportant des crans destinés à coopérer avec ces logements correspondants ménagés dans le moyeu et étant aptes à être entraînés en rotation par le pignon fou.

Le moyeu comporte de préférence au moins une chambre secondaire pouvant être alimentée en fluide hydraulique sous pression et délimitée en partie par une surface solidaire du moyeu de synchronisation et en partie par une paroi mobile axialement formant piston secondaire, une partie du piston secondaire étant capable d'exercer une poussée axiale sur le piston principal dans le sens du décrabotage.

Dans ce cas, la surface du piston secondaire soumise à l'action du fluide hydraulique de commande est avantageusement inférieure à la surface du piston principal soumise à l'action du fluide hydraulique de commande.

Dans un mode de réalisation, le piston secondaire coulisse à l'intérieur de la chambre secondaire et est guidé au moyen d'un pion solidaire du piston secondaire et coulissant dans un orifice du moyeu.

Chaque pignon fou comporte de préférence une jupe axiale de support montée sur l'arbre secondaire et sur laquelle glisse le piston principal.

Avantageusement, une rondelle de glissement est interposée entre ladite portion du piston secondaire et le piston principal.

Selon une autre caractéristique de la boîte de vitesses selon l'invention, les pignons fous sont montés sur l'arbre secondaire par paires de deux pignons se faisant face axialement avec interposition d'un moyeu commun comportant deux pitons secondaires communiquant avec un orifice unique soumis à la pression du fluide hydraulique.

Dans un mode de réalisation avantageux, l'ensemble de pignons fixes et l'ensemble de pignons fous comportent chacun cinq pignons, ladite boîte constituant ainsi une boîte de vitesses à six rapports de vitesses.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique d'une boîte de vitesses robotisée à six vitesses conforme à l'invention ; et
- la figure 2 est une vue en coupe schématique d'une partie de la boîte de vitesses selon l'invention.

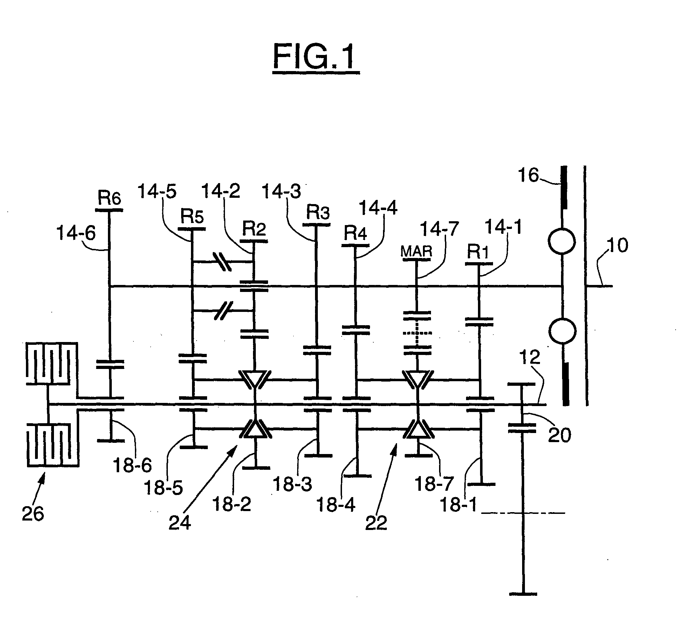

Sur la figure 1, on a représenté de manière schématique la structure d'une boîte de vitesses robotisée conforme à l'invention, à six rapports de vitesses.

Comme on le voit sur cette figure, la boîte comporte un arbre primaire 10 et un arbre secondaire 12.

L'arbre primaire 10 porte six pignons primaires de marche avant, respectivement référencés 14-1 pour le premier rapport de transmission R1, 14-2 pour le deuxième rapport de transmission R2, 14-3 pour le troisième rapport de transmission R3, 14-4 pour le quatrième rapport de transmission R4, 14-5 pour le cinquième rapport de transmission R5, 14-6 pour le sixième rapport de transmission R6, ainsi qu'un pignon primaire 14-7 de marche arrière AR.

Les pignons primaires de marche avant 14-1, 14-3, 14-4, 14-5 et 14-6 sont solidaires de l'arbre primaire 10. Au contraire, le pignon primaire 14-2 servant au passage du deuxième rapport de transmission R2 est monté libre en rotation par rapport à l'arbre 10.

L'arbre primaire 10 est relié par un embrayage d'entrée 16 à l'arbre de sortie d'un moteur thermique d'entraînement du véhicule, non représenté.

Par ailleurs, des pignons secondaires de marche avant 18-1, 18-3, 18-4, 18-5 et 18-6 engrènant avec les pignons primaires de marche avant correspondants sont montés fous sur l'arbre secondaire 12, tandis qu'un pignon secondaire de marche avant 18-2, servant au passage du deuxième rapport de vitesse R2, est solidaire en rotation de l'arbre secondaire 12 et engrène avec le pignon primaire 14-2 du deuxième rapport de transmission R2.

De même, un pignon d'attaque ou de sortie 20, également solidaire en rotation de l'arbre secondaire 12 est monté à l'extrémité de ce dernier du côté de l'embrayage 16.

Par ailleurs, deux dispositifs de synchronisation 22 et 24 solidaires de l'arbre secondaire 12, sont disposés respectivement entre les pignons secondaires 18-1 et 18-4 et les pignons secondaires 18-3 et 18-5. Un pignon secondaire de marche arrière 18-7 est solidaire du synchroniseur 22. Le pignon secondaire 18-2 pour le passage du deuxième rapport de transmission R2 est également solidaire de l'autre synchroniseur 24.

De l'autre côté du pignon d'attaque ou de sortie 20, l'arbre secondaire 12 est pourvu d'un embrayage de répartition de couple 26 servant à réaliser un couplage entre l'arbre secondaire 12 et le pignon secondaire de marche avant 18-6 pour le sixième rapport de transmission.

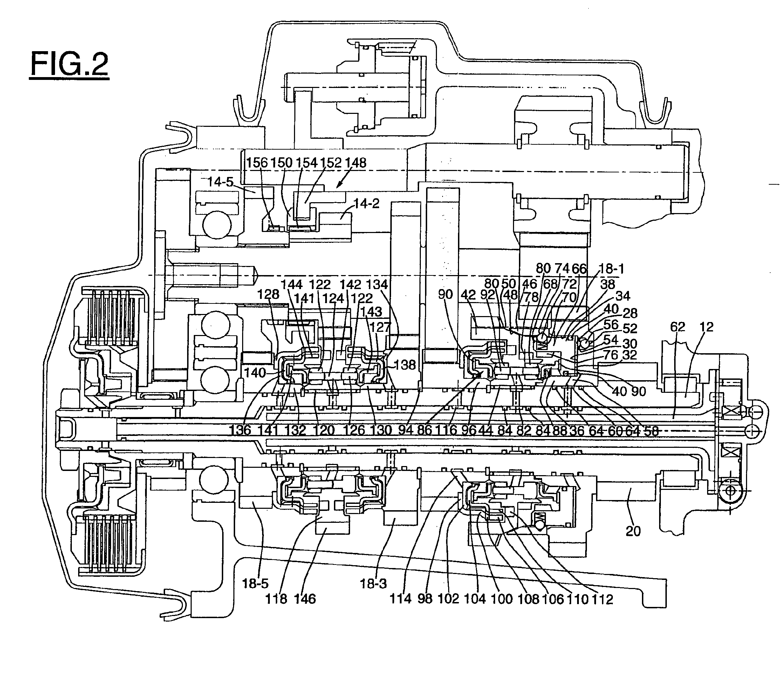

On va maintenant décrire en se reportant à la figure 2 de manière plus précise les dispositifs de synchronisation 22 et 24.

Le pignon fou 18-1 monté libre sur l'arbre secondaire 12 est bloqué en translation par le pignon d'entrée 20. Le pignon 18-1 comporte un chambrage qui définit une chambre principale 28 délimitée en partie par une surface radiale 30 du pignon 18-1 et en partie par une paroi mobile axialement 32, constituant le fond d'un piston principal 34 qui peut coulisser à l'intérieur de la chambre principale 28. Le pignon fou 18-1 comporte une jupe axiale de support 36 montée autour de l'arbre 12 et permettant d'améliorer la tenue du pignon 18-1 en évitant tout risque de basculement de celui-ci lors d'efforts axiaux exercés sur le pignon 18-1. Le piston principal 34 peut coulisser axialement en glissant le long de la surface périphérique externe de la jupe de support 36. Le piston 34 coulisse par ailleurs à l'intérieur de la chambre 28 en glissant le long d'un alésage 38 qui délimite la chambre 28 pratiquée à l'intérieur du pignon 18-1. L'étanchéité est assurée par deux segments d'étanchéité 40.

Le pignon 18-1 présente des secteurs circulaires (non représentés) également répartis sur la périphérie, faisant saillie axialement en direction d'un moyeu de synchronisation 42 solidaire en rotation de l'arbre secondaire 12 au moyen de cannelures 44. Ces secteurs circulaires coopèrent avec un anneau de synchronisation 46 qui présente une surface conique 48 qui est capable de coopérer avec une surface conique 50 correspondante du moyeu de synchronisation 42. L'anneau de synchronisation 46 comprend un ensemble de pattes axiales, non représentées, également réparties sur la périphérie, qui viennent se loger chacune dans l'espace libre entre deux secteurs circulaires voisins du pignon 18-1.

De même, le piston principal 34 présente une portion annulaire en saillie axiale dirigée vers le moyeu 42 (non représentée) qui est munie sur sa surface radialement externe de pattes radiales dirigées vers l'extérieur et dont l'écartement est tel que les pattes axiales de l'anneau de synchronisation 36 viennent chacune se loger entre deux pattes radiales d'une paire de pattes, un jeu étant laissé entre les pattes axiales et les pattes radiales, afin de faciliter le crabotage.

Cet agencement permet de rendre solidaire en rotation le pignon fou 18-1, et le piston principal 34.

Par ailleurs, dans la partie radialement externe de la chambre principale 28, se trouve placé un orifice traversant 52 obturé par un système de plaque 54 et de bille 56 assurant la fonction d'un clapet anti-retour. Lorsque la pression du fluide hydraulique n'est plus appliquée, la chambre principale 28 peut être complètement vidée par l'orifice 52, la bille 56 laissant alors le passage. Au contraire, lorsque la pression est appliquée à l'intérieur de la chambre principale 28, la bille 56 vient se plaquer sur son siège à l'intérieur de l'orifice 52, ce qui permet l'établissement de la pression dans la chambre principale 28.

Un ou plusieurs trous de communication 58 pratiqués dans l'épaisseur de la jupe de support 36, sensiblement radialement, permettent de faire communiquer la chambre principale 28 avec une rainure périphérique 60 qui communique avec un conduit d'alimentation 62 ménagé à l'intérieur de l'arbre 12. L'étanchéité est assurée par deux segments 64.

Par ailleurs, la portion annulaire 66 du piston 34 présente des logements radiaux 68 recevant un ressort 70 et une bille 72 poussée vers l'extérieur par le ressort 70, de manière à maintenir axialement l'anneau de synchronisation 46. A cet effet, la bille 72 coopère avec une rainure 74 ménagée dans l'alésage de l'anneau de synchronisation 46.

A l'intérieur de l'alésage de la portion annulaire 66 sont taillées une pluralité de dents de crabot 76 munies d'entrées de dentures adaptées et capables de coopérer avec des dents de crabot correspondantes 78 pratiquées sur le moyeu 42.

Le moyeu 42, monté comme il a été dit précédemment sur l'arbre 12 dont il est solidaire en rotation, est disposé entre le pignon 18-1 correspondant au premier rapport de transmission et le pignon 18-4 correspondant au quatrième rapport de transmission. Il présente deux chambres secondaires 80, qui peuvent être alimentées en fluide hydraulique sous pression par l'intermédiaire d'une pluralité d'orifices axiaux traversant le moyeu et d'un ou de plusieurs trous sensiblement radiaux qui communiquent avec une rainure périphérique 82 de l'arbre 12 étanchéifiée par deux segments 84. Chacune des chambres secondaires 80 constitue un logement ouvert axialement vers l'extérieur, à l'intérieur duquel peut coulisser axialement un piston secondaire 86, 88. Chacun des pistons, secondaires 86, 88 est constitué, dans l'exemple illustré, par une pièce en tôle formée comportant une partie annulaire, sur laquelle est surmoulée une matière synthétique qui vient en contact avec les parois de la chambre secondaire de façon à assurer l'étanchéité. Chaque piston secondaire comporte également une portion radiale qui porte une rondelle de glissement, telle qu'une rondelle de glissement 90 en contact avec une surface radiale correspondante du piston principal 34.

Chacun des pistons secondaires 86, 88 possède, du côté du moyeu 42, des pions de guidage 92 pouvant coulisser à l'intérieur d'orifices traversant correspondants pratiqués dans le moyeu 42 en vue de leur guidage. Les pistons secondaires 86, 88 sont ainsi guidés à la fois dans leur glissement axial à l'intérieur des chambres secondaires 80 et maintenus fixes en rotation par rapport au moyeu 42, lui-même fixe en rotation sur l'arbre 12.

Le pignon fou 18-4 correspondant au quatrième rapport de transmission, qui peut tourner librement sur l'arbre 12, est arrêté en translation par un clips 94 et présente une jupe de support 96 analogue à la jupe de support 36 du pignon 18-1. Sur la face frontale du pignon 18-4 qui fait face au moyeu 42 est fixée par exemple par soudage, une coupelle 98 en tôle formée présentant une portion annulaire 100 qui définit, avec la jupe de support 96, une chambre principale 102 capable de recevoir un piston principal 104. La coupelle 98 comporte une pluralité de crans axiaux 106 dirigés vers le moyeu 42 laissant entre eux des espacements. Le piston principal 104, réalisé dans l'exemple illustré, sous la forme d'une pièce en tôle formée, présente des pattes radiales 108, et des dents axiales 110 de crabot capables de pénétrer dans des échancrures 112 de crabot pratiqué dans le moyeu 42.

Un matériau d'étanchéité est surmoulé à la périphérie du piston et assure l'étanchéité de celui-ci lors de son coulissement dans la chambre.

La chambre est alimentée en fluide hydraulique sous pression par un conduit sensiblement radial 114 traversant la jupe 96 et communiquant avec une rainure périphérique 116 de l'arbre 12, dont l'étanchéité est assurée par des segments d'étanchéité prévus à cet effet.

Comme on le conçoit, le piston secondaire coulissant axialement dans une des chambres secondaires du moyeu 42 peut exercer une poussée axiale sur le piston principal 34 par l'intermédiaire d'une coupelle de glissement 90, comme c'est également le cas pour le piston secondaire 88.

En ce qui concerne le dispositif de synchronisation 24 monté entre les pignons fous 18-3 et 18-5, celui-ci comporte une structure similaire au dispositif de synchronisation 22 décrit précédemment.

En particulier, il comporte un moyeu 118 rendu solidaire en rotation de l'arbre 12 par des cannelures 120. Il comporte deux chambres secondaires 122 identiques aux chambres secondaires du premier moyeu 42 pouvant être alimentée en fluide hydraulique sous pression et délimitée en partie par une surface solidaire du moyeu de synchronisation et en partie par une paroi mobile axialement formant piston secondaire. Ces chambres sont alimentées en fluide hydraulique sous pression par l'intermédiaire d'orifices axiaux 124 et permettent en outre le coulissement de pions de guidage 126 de structure identique à celle des pistons secondaires montés dans le moyeu 42.

Le pignon fou 18-3 correspondant au troisième rapport de transmission est séparé du pignon 18-4 par le clips 94. Comme le pignon 18-4, il peut tourner librement sur l'arbre 12. Il porte également une coupelle 127 sensiblement annulaire, dirigée axialement, soudée sur le pignon 18-3.

Le pignon 18-5 peut également tourner librement par rapport à l'arbre 12, et présente une structure analogue à celle du pignon 18-4 précédemment mentionné. Il est muni, comme ce dernier, d'une coupelle soudée 128 de même structure que la coupelle 98.

Les pignons respectifs 18-3 et 18-5, équipés de leurs coupelles soudées, définissent avec leurs jupes de support respectives 130 et 132 deux chambre principales 134 et 136 à l'intérieur desquelles peuvent coulisser, guidés par les pions 126, deux pistons principaux 138 et 140 et les pistons secondaires 141 et 143 qui leur correspond et qui délimitent une partie des chambres secondaires. Comme décrit précédemment en ce qui concerne le premier dispositif de synchronisation, une partie du piston secondaire est capable d'exercer une poussée axiale sur le piston principal dans le sens du décrabotage, par l'intermédiaire d'une rondelle de glissement. En outre, la surface du piston secondaire soumise à l'action du fluide hydraulique de commande est inférieure à la surface du piston principal soumise à l'action du fluide hydraulique de commande

Chacun de ces pistons principaux 138 et 140 comporte, comme le piston 86, des dents de crabot 141 capables de coopérer avec des évidements 142 pratiqués de chaque côté du moyeu 118.

Les pistons 138 et 140 comportent en outre des pattes radiales, telles que 144, qui coopèrent avec les coupelles de façon à solidariser en rotation les pistons principaux et les pignons respectifs 18-3 et 18-5. Comme on le voit par ailleurs sur la figure 2, à l'intérieur de l'arbre 1 se trouvent ménagés différents conduits d'alimentation en fluide hydraulique de commande.

A titre d'exemple, on a représenté schématiquement sur la figure 2 un conduit 62, déjà évoqué, qui alimente la chambre principale 28 du pignon 18-1 du premier rapport de transmission, d'autres conduits étant également prévus pour alimenter les autres chambres et provoquer en conséquence le déplacement des pistons principaux ainsi que des pistons secondaires dans les chambres respectives.

Ainsi, pour provoquer l'enclenchement d'un rapport de vitesses sélectionné, on provoque l'alimentation en fluide hydraulique d'une chambre principale ou secondaire jusqu'à obtenir la solidarisation d'un pignon secondaire correspondant à un rapport de transmission à engager avec l'un des moyeux 42 ou 118.

Ainsi, par exemple, pour un passage du point mort au premier rapport de transmission, l'embrayage d'entrée 16 est ouvert. Dès que le conducteur démarre le moteur du véhicule, le levier de commande de la boîte de vitesses étant en position neutre, on commande l'alimentation du fluide hydraulique de manière à mettre sous pression le canal d'alimentation qui est prévu pour alimenter toutes les chambres secondaires 80, 122 et 124 qui se trouvent dans les moyeux 42 et 118. Cette alimentation a pour effet de repousser les pistons secondaires qui s'écartent respectivement des moyeux et repoussent tous les pistons principaux, c'est-à-dire le piston 34 à l'intérieur du pignon 18-1 du premier rapport de transmission, le piston 86 à l'intérieur de la coupelle du pignon 18-4 du quatrième rapport de transmission et les pistons 138 et 140 en direction des pignons fous respectifs du troisième et du cinquième rapport de transmission. Le calculateur électronique donne alors l'ordre de passer au premier rapport de transmission. Le canal 62 est alors alimenté pour mettre sous pression la chambre principale 28 du premier pignon fou 18-1, tout en maintenant l'alimentation en pression du conduit qui alimente toujours les chambres secondaires des deux moyeux 42 et 118.

La surface du piston principal 34 soumise à la pression du fluide hydraulique régnant dans la chambre principale 28 est choisie de façon à être plus importante que la surface du piston secondaire 88 soumise à la pression de la chambre secondaire correspondant. De cette manière, bien que la pression soit maintenue dans cette chambre secondaire, le piston principal 34 peut coulisser axialement en s'écartant du pignon 18-1 sous l'action de la pression régnante dans la chambre principale 28, repoussant le piston secondaire 88 à l'encontre de la pression hydraulique régnant dans la chambre secondaire 80.

Le déplacement axial du piston principal 34 provoque en même temps le déplacement de l'anneau de synchronisation 46 qui se trouve entraîné par les billes 72 coopérant avec les rainures coniques 74.

Ce mouvement se poursuit jusqu'à ce que la surface conique 48 de l'anneau de synchronisation entre en contact de frottement avec la surface conique correspondante 50 du moyeu 42. Dès cette entrée en contact, on procède à la mesure de la vitesse différentielle entre l'anneau de synchronisation 46 solidaire du pignon fou 18-1 et le moyeu 42 solidaire de l'arbre 12. Lorsqu'un seuil acceptable prédéterminé est détecté par des moyens de mesure appropriés et non représentés, le calculateur transmet un ordre d'augmentation de la pression du fluide hydraulique, de sorte que le piston 34 poursuit son déplacement axial jusqu'à une position dans laquelle les billes 72 s'enfoncent dans leur logement qui écrase les ressorts 40. A ce moment, l'anneau de synchronisation 46 n'est plus soumis à l'effort axial en direction du moyeu 42. Cette situation dure un court instant, jusqu'à ce que le piston 34, qui continue son mouvement de coulissement axial, provoque la rencontre des dents de crabot 76 solidaires du piston 34 et des dents de crabot 78 solidaires du moyeu 42. Au moment de cette rencontre, la vitesse de rotation du piston et du pignon 18-1 est suffisamment proche de celle du moyeu 42 pour que le crabotage s'effectue sans difficulté.

De même, pour le passage du quatrième rapport de transmission, lorsque la vitesse de rotation du pignon fou 18-4 et du moyeu 42 sont sensiblement identiques, le calculateur commande la distribution hydraulique de façon à sélectionner le canal destiné à l'alimentation des chambres secondaires 80, ainsi qu'un canal d'alimentation, non représenté, qui alimente la rainure et les conduits 114 qui alimentent la chambre principale 102 du pignon 18-4 du quatrième rapport de transmission. Cela a pour effet de repousser axialement le pignon principal 104 correspondant vers le moyeu 42.

La vitesse de rotation du moyeu étant à cet instant proche de la vitesse de rotation du pignon 18-4, le crabotage des dents 110 dans les évidements 112 s'effectue sans difficulté.

Le passage des troisième et cinquième rapports de transmission, qui s'effectue en solidarisant en rotation les pignons fous respectifs 18-3 et 18-5 avec le moyeu 118 est réalisé de manière similaire au passage des premier et quatrième rapports de transmission.

Par ailleurs, comme on le voit sur les figures 1 et 2, le pignon secondaire 18-2 destiné au deuxième rapport de transmission est solidarisé en rotation de l'arbre secondaire 12 et est réalisé sous la forme de dentures 146 ménagées sur le moyeu 118, le pignon primaire 14-2 pour le deuxième rapport étant monté libre en rotation sur l'arbre principal 10.

Ainsi, pour le passage du deuxième rapport de transmission, la boîte de vitesse comporte un dispositif de synchronisation 148 additionnelle servant à solidariser sélectivement en rotation le pignon principal 14-2 pour le deuxième rapport de transmission avec le pignon principal 14-5 pour le cinquième rapport de transmission, lequel est solidaire, en rotation, de l'arbre primaire 10.

Comme on le voit sur la figure 2, ce dispositif de synchronisation comporte un baladeur 150 monté sur une fourchette 152. Cette fourchette 152 est pilotée par des moyens moteur commandés par le calculateur de gestion de la boîte, de manière à provoquer le déplacement axial du baladeur 150 d'une première position, représentée sur la figure 2, dans laquelle les pignons 14-2 et 14-5 sont désengagés, et une deuxième position axiale, (non représentée), dans laquelle le baladeur 150 solidarise en rotation des dents 154 et 156 ménagées respectivement sur les deux pignons 14-2.

Comme on le conçoit, cet agencement, selon lequel un pignon secondaire additionnel est prévu sur le moyeu d'un dispositif de synchronisation, permet de réaliser une boîte de vitesses à six rapports de transmission, sans nécessiter de doter la boîte d'un arbre secondaire supplémentaire, et sans augmenter la longueur générale de la boîte de vitesses.

## Revendications

1. Boîte de vitesses de véhicule automobile, du type comprenant un ensemble de pignons fixes (14-1, 14-3, ...,14-7) montés sur un arbre principal (10), un ensemble de pignons fous (18-1, 18-3, ...18-7) correspondant montés sur un arbre secondaire (12) et engrènant respectivement avec les pignons fixes, au moins un premier dispositif de synchronisation (24) capable de solidariser un pignon fou avec l'arbre secondaire et comprenant un moyeu de synchronisation (118) solidaire en rotation de l'arbre secondaire et des moyens de commande de sélection et de passage de rapport de vitesse agissant sur le dispositif de synchronisation, **caractérisée en ce que** le moyeu de synchronisation porte un pignon fixe additionnel (18-2) engrènant avec un pignon fou (14-2) monté sur l'arbre primaire et **en ce qu'**elle comporte en outre un deuxième dispositif de synchronisation (148) capable de solidariser en rotation le pignon fou monté sur l'arbre primaire et l'arbre primaire.

2. Boîte de vitesses selon la revendication 1, **caractérisée en ce que** le deuxième dispositif de synchronisation est un dispositif de synchronisation du type à baladeur (150) et fourchette de commande (152).

3. Boîte de vitesses selon l'une des revendications 1 et 2, **caractérisée en ce que** le premier dispositif de synchronisation comporte au moins une chambre primaire (134, 136) délimitée en partie par une surface solidaire d'un pignon fou et en partie par une paroi mobile axialement formant piston principal (138, 140), ledit piston comportant des crans (141) destinés à coopérer avec des logements correspondants (142) ménagés dans le moyeu et étant apte à être entraîné en rotation par le pignon fou.

4. Boîte de vitesses selon la revendication 3, **caractérisée en ce que** le moyeu comporte au moins une chambre secondaire (122) pouvant être alimentée en fluide hydraulique sous pression et délimitée en partie par une surface solidaire du moyeu de synchronisation et en partie par une paroi mobile axialement formant piston secondaire (141, 143), une partie du piston secondaire étant capable d'exercer une poussée axiale sur le piston principal dans le sens du décrabotage.

5. Boîte de vitesses selon la revendication 4, **caractérisée en ce que** la surface du piston secondaire (141, 143) soumise à l'action du fluide hydraulique de commande est inférieure à la surface du piston principal soumise à l'action du fluide hydraulique de commande.

6. Boîte de vitesses selon l'une des revendications 4 et 5, **caractérisée en ce que** le piston secondaire coulisse à l'intérieur de la chambre secondaire et est guidé au moyen d'un pion (126) solidaire du piston secondaire (141, 143) et coulissant dans un orifice du moyeu.

7. Boîte de vitesses selon l'une quelconque des revendications 3 à 5, **caractérisée en ce que** chaque pignon fou comporte une jupe axiale de support (130, 132) montée sur l'arbre secondaire et sur laquelle glisse le piston principal.

8. Boîte de vitesses selon l'une quelconque des revendications 1 à 7, **caractérisée en ce qu'**une rondelle de glissement est interposée entre ladite portion du piston secondaire et le piston principal.

9. Boîte de vitesses selon l'une quelconque des revendications 1 à 8, **caractérisée en ce que** les pignons fous sont montés sur l'arbre secondaire par paires de deux pignons se faisant face axialement, avec interposition d'un moyeu commun comportant deux pistons secondaires communiquant avec un orifice unique soumis à la pression du fluide hydraulique.

10. Boîte de vitesses selon l'une quelconque des revendications précédentes, **caractérisée en ce que** l'ensemble de pignons fixes et l'ensemble de pignons fous comportent chacun cinq pignons, ladite boîte constituant une boîte de vitesses à six rapports de vitesses
